Europäisches Patentamt

European Patent Office

Office européen des brevets

(19)

(11) **EP 0 479 915 B1**

(12) **EUROPEAN PATENT SPECIFICATION**

(45) Date of publication and mention
of the grant of the patent:
**18.08.1999  Bulletin 1999/33**

(21) Application number: **90911349.0**

(22) Date of filing: **28.06.1990**

(51) Int Cl.[6]: **G06F 15/02**, G06F 3/00,
G06F 1/16

(86) International application number:
**PCT/US90/03639**

(87) International publication number:
**WO 91/00523 (10.01.1991 Gazette 1991/02)**

(54) **COMPACT PORTABLE COMPUTER**

KOMPAKTER TRAGBARER COMPUTER

ORDINATEUR PORTATIF COMPACT

(84) Designated Contracting States:
**DE FR GB IT**

(30) Priority:  **30.06.1989  US 375721**

(43) Date of publication of application:
**15.04.1992   Bulletin 1992/16**

(73) Proprietor: **FUJITSU PERSONAL SYSTEMS, INC.**
**Santa Clara, CA 95054 (US)**

(72) Inventors:
 • **FAIRBANKS, John, P.**
  **Sunnyvale, CA 94087 (US)**
 • **HARPER, Leroy, D.**
  **Cupertino, CA 95014 (US)**
 • **PRODMOU, Stavro, E.**
  **Los Altos, CA 94022 (US)**
 • **CULLIMORE, Ian, H., S.**
  **Palo Alto, CA 94306 (US)**
 • **ANGLIN, Noah, L.**
  **San Jose, CA 95127 (US)**
 • **ICHIKAWA, Shinpei**
  **Cupertino, Calif. 95104 (US)**
 • **MACHAMER, Roy, J.**
  **San Francisco, CA 94123 (US)**
 • **MIRACLE, Gary, R.**
  **Scotts Valley, CA 95066 (US)**

(74) Representative: **Meddle, Alan Leonard**
**FORRESTER & BOEHMERT**
**Franz-Joseph-Strasse 38**
**80801 München (DE)**

(56) References cited:
 **EP-A- 0 126 542**   **EP-A- 0 149 762**
 **DE-A- 3 405 568**   **DE-A- 3 630 548**
 **DE-A- 3 717 528**   **GB-A- 2 172 441**
 **GB-A- 2 172 441**   **US-A- 3 760 261**
 **US-A- 4 261 042**   **US-A- 4 328 399**
 **US-A- 4 571 456**   **US-A- 4 574 235**
 **US-A- 4 593 409**   **US-A- 4 742 478**
 **US-A- 4 830 328**   **US-A- 4 839 837**
 **US-A- 4 841 241**

 • **CAMBRIDGE COMPUTER LTD. 'Z88 Cambridge**
  **Computer User Guide' 1987**
 • **M &P COMPUTER 1988, pages 90 - 93 M.**
  **MICHELETTI 'Cambridge Z88 - Eureka! II**
  **Portatile'**
 • **PATENT ABSTRACTS OF JAPAN vol. 009, no.**
  **177 (P-375)23 July 1985**
 • **BEACHAM et al., "Using WordPerfect", Third**
  **Edition, copyright 1987, see the Keyboard**
  **templates in the back of the book.**

## Description

This invention relates to a compact portable computer including a keyboard, in particular a battery operated computer using a liquid crystal display.

Personal computers have become faster and smaller in recent years. Desk top computers typically use household power and run commercially available software written for execution through an operating system such as MS-DOS® (MS-DOS® is a registered trademark of Microsoft Corporation) or Unix® (Unix® is a registered trademark of American Telephone & Telegraph). In addition to the computing unit, these computers include a monitor for displaying information to the user and a keyboard for receiving information from the user. They may include disk drives, a printer, a communication modem, and may include even more peripheral devices. Since the computer must be compatible with commercially available software, a basic input/output system (BIOS) which is unique for each computer converts commands generated by the operating system or application program to specific machine commands implemented by the hardware of the machine. These computers include an internal clock which operates continuously when the machine is turned on and controls the central processor to access memory, load registers, read and write to disk, detect keyboard use, and control a display, all operations synchronized with cycles of the internal clock. In addition, if the computer accesses an external port, the external communications may be controlled by an asynchronous clock through a UART (universal asynchronous receiver/transmitter). The power used by these desk-top wall-plug computers has not been of particular concern because it is small when compared with power used by other appliances which also use the same power source.

Methods for reducing power used by a computer have included using CMOS circuitry, and using liquid crystal display monitors rather than cathode ray tube monitors or plasma display technology.

There exists a class of small, lightweight computers which have been designed for low power and may use batteries. These computers do not have the computing capability of a desk top machine nor the ability to run the full range of commercial software and operating systems available for desk top machines. They typically have reduced display resolution and inconvenient keyboards.

Another class of computers generally described as lap top computers are battery operated, portable, and may run a broad range of commercial software. However, these lap top computers are powered by bulky rechargeable batteries and can only operate for a few hours before requiring the batteries to be recharged.

## SUMMARY OF THE INVENTION

The present invention provides a compact portable computer as defined in claim 1.

In a preferred embodiment the computer is housed in a two-part low profile rectangular case hinged along one long edge and latched at an opposite edge. The hinge extends along a back edge of the case and rotatably joins upper and lower portions of the case. This hinge is described in commonly assigned U.S. application serial no. 07/373,769 (US-A-4 984 706) invented by Noah L. Anglin entitled "HINGE FOR HAND HELD COMPUTER". The case is preferably of a plastic such as polycarbonate and/or ABS plastic or both. The case is of molded construction.

A lower portion of the case includes a keyboard, one or two memory cards, batteries, and most of the integrated circuit components of the computer. The integrated circuit components in this lower portion are attached to the lower side of a printed circuit board which occupies most of the rectangular area encompassed by the case. Included in these integrated circuit components are two ASIC (application specific integrated circuit) chips. In order to conserve space, particularly vertical space, these ASIC chips are put on the board without the usual packaging. Such packaging (which is omitted) would include a plastic or ceramic protective cover surrounding a lead frame which connects interior pin-outs to exterior pins. The unpackaged chip is bonded directly to the lower printed circuit board, thereby saving both horizontal and vertical space in the present very compact structure. The microprocessor chip is also attached directly to the printed circuit board without intervening packaging, which reduces connection points and cost.

Also attached to the lower side of this printed circuit board are connectors for receiving removable memory cards, preferably at least two connectors for two cards. These connectors are the same thickness as the card itself. No circuit components are located on that part of the printed circuit board adjacent to where the memory cards are placed, so that the memory cards fit within the existing envelope of the computer housing. A tray for holding a memory card which forms part of the lower case is described in detail in commonly assigned U.S. application serial no. 07/374,409 (US-A-5 315 478) invented by Noah L. Anglin and Peter F. Cadwell entitled "MEMORY CARD TRAY FOR PORTABLE COMPUTER".

At one or several edges of the printed circuit board are pads to which traces extend from pins of the integrated circuit chips to which test signals are applied during manufacturing. These pads are accessed with edge connectors which are designed to slip over an edge of the board and make electrical contact with the pads. This avoids the need for applying test probes to the interior of the circuit board and thereby saves time and avoids testing mistakes.

The upper side of the same printed circuit board in the lower portion of the case serves as a back plate for the keyboard. Traces for electrically detecting each key state are applied directly to the upper side of this printed circuit board. The keyboard includes a keyplate through which extend a plurality of keys. The keys press corresponding cones in an insulating flexible membrane, each cone including a conductive flexible pad which in a compressed position spans conductive traces on the printed circuit board and in a non-compressed position leaves these conductive traces unconnected.

The keyboard occupies most of the inner surface of the lower case, occupying more than half, and preferably 70% or more of the surface area of the inner surface of the lower case.

The upper side of this printed circuit board also includes traces for detecting a machine reset. As a novel feature of an embodiment of the present invention, reset is activated by inserting a pointed object such as a pencil point through an opening in the keyboard and pressing an electrically conductive pad rather than by pressing a key or combination of keys.

As another novel feature of an embodiment of the present invention, one of the keyboard keys is an on/off toggle key. The computer never turns completely off, but in the off state operates only a low frequency clock which keeps time-of-day.

After testing of the lower printed circuit board and installation of the membrane during assembly of the computer, the keyplate which holds the keys in position is welded to the lower portion of the case in order to achieve accurate registration of the keys, the membrane, and the traces.

Located between the hinge and the keyboard area is a compartment including batteries and a capacitor. This capacitor is sufficient to maintain volatile memory with the computer in the off state while batteries are being changed. The batteries are covered by a plate which is imprinted with descriptions of a top row of keyboard function keys, these function keys being located just adjacent to the battery cover plate. In one embodiment, four notations in four different colors are imprinted on the cover plate adjacent each function key. Keys for "shift", "alt", "ctrl", and a special logo key are correspondingly colored to indicate to a user that combining the "shift", "alt", "ctrl", or the logo key with the adjacent function key produces the function noted in color adjacent the function key. Alternate cover plates, tapes for attaching to the cover plate, or cards for placing adjacent this cover plate may be provided for use with different software packages.

An upper portion of the case houses a liquid crystal display plus a separate power supply for the liquid crystal display. In one embodiment a space is provided between the display and the outside of the upper case for insertion of a display back light powered by separate batteries or other power source. This back light is described in detail in commonly assigned U.S. application serial no. 07/276,167 (US-A-5 030 943).

The power supply for the liquid crystal display is described in detail in commonly assigned U.S. application serial no. 07/374,340 (US-A-5 130 703) invented by John. P. Fairbanks, Andy. C. Yuan, and Lance T. Klinger, entitled "POWER SYSTEM AND SCAN TECHNIQUE FOR A LIQUID CRYSTAL DISPLAY", attorney docket no. M-806.

The liquid crystal display occupies most of the entire area enclosed by the upper portion of the case, with a narrow frame surrounding the liquid crystal display and its cover.

The display when displaying characters shows 25 lines of 80 characters per line. A line of characters is typically 8 pixels tall so that the standard 25 lines of text are displayed using 200 rows of pixels.
Additionally, a status line using one or more rows of pixels at the top, bottom or both, of the display are provided for showing status of various software programs and hardware conditions. Coordinating with these displayed status lines are imprinted legends along the top, bottom, or both margins of the display frame for indicating to the user the meanings represented by these status lines. As with the keyboard, different legends can be provided for different software packages.

The supporting mechanism for the liquid crystal display is described in commonly assigned U.S. application serial no. 07/359,191 (US-A-5 002 368) invented by Noah L. Anglin, and entitled "LIQUID CRYSTAL DISPLAY MOUNTING STRUCTURE".

Since separate power supplies are located in the two portions of the computer case, the number of current carrying lines which must extend between the upper and lower housing is minimized. A cable including these lines extends from the lower to the upper portion of the case and is located toward the interior of the computer from the hinge axis. The cable has sufficient length to span from its lower point of connection to its upper point of connection when the computer case is fully open. The spiral design of the cable acts as a spring so that when the computer is closed, the excess cable slack is taken up in a cable cover located in the upper or lower portion of the case, preferably lower. This cable cover protects the cable from excess flexure, assuring long life.

This arrangement of the components allows for the computer to fold to a very compact size for being carried and to open to a convenient size in which the two components which interface with the user, namely the keyboard and the display, are large enough to be convenient. To further reduce thickness, the keys are made so that some keys are pressed by the display upon closing the computer case. Preferably, these are the front (lower) row of keys.

In one embodiment, the keyboard is controlled such that a multiplicity of key presses does not cause an executing program to cease operation. The on/off key is a key not depressed when the case is closed. When the on/off key is pressed to toggle the computer to its off state, other keys are deactivated such that pressing the other keys upon closing the case is not detected by the computer. When the computer is in this off state, the processor does not lose its place in the program which was running. All memory remains static but execution is halted until the machine is moved out of the off state. While in this off state, timer interrupts are processed allowing time of day updating, and allowing software which uses the time of day interrupt to process the interrupt.

An embodiment of the present invention includes a power management system which maintains as many components of the computer in an off state for as much time as possible even when the computer is on. Individual components can be turned off while other components remain on. Components of the machine which can be turned off while the machine appears to a user to be on include the oscillator and clock which cycle the central processor, another oscillator and clock which control the display, a direct memory access (DMA) clock tied to the central processor oscillator which controls direct memory access circuits, and an oscillator and clock for communication to an external port. While the machine is turned on, that is, while the display is on and the machine is responding to user input, the hardware detects activities for which some parts of the machine can be turned off. These clocks can actually be turned off while the user is in the midst of executing a program. For example, when a user is executing a word processing program, the clock which controls the central processor is turned off for most of the time between one keystroke and the next.

In a preferred embodiment, four activities are monitored for determining when parts of the machine can be turned off: the state of the on/off switch, keyboard presses, software activity and clock ticks generated by a low frequency clock and a divider circuit. When these activities are not occurring, certain clocks and devices driven by the clocks are turned off. Because in a preferred embodiment CMOS circuitry is used, which uses most of its power when switching, turning off oscillators and their associated clocks greatly reduces power consumption of the system. Turning off devices themselves also reduces power. This power management system is described in detail in commonly assigned U.S. application serial no. 07/373,440 (US-A-5 428 790) invented by Leroy D. Harper, Grayson C. Schlichting, Douglas A. Hooks, Ian H.S. Cullimore, and Gavin Bradshaw, attorney docket no. M-924, entitled "POWER MANAGEMENT SYSTEM FOR LOW POWER COMPUTER".

US-A-4 571 456 discloses a portable computer of conventional construction with a main printed circuit board, carrying most of the integrated circuit devices of the computer, located in the base section of the computer housing and a conventional keyboard located on the upper surface of the base section.

US-A-4 328 399 discloses a pushbutton switch assembly for a telecommunications apparatus. In one embodiment of this pushbutton assembly, circuit components such as integrated circuits are mounted on one side of a steel ceramic circuit board, whereas the other side of the board includes switch contacts for detecting key presses of keys located on the other side of the board.

CAMBRIDGE COMPUTER LTD. "Z88 Cambridge Computer User Guide" 1987, pages 8 and 9 and M&P Computer 1988, pages 90 - 93, "Marco Micheletti: Cambridge Z88 - Eureka! I1 Portatile disclose portable computers. These computers have a reset function which is not activated with a normal key but by means of an object (pin or paperclip) inserted through a hole in the case of the computer to reach and activate the reset.

BRIEF DESCRIPTION OF THE DRAWINGS

Figure 1. Perspective view of the computer.
Figure 2. Exploded view of keyboard.
Figure 3. System diagram showing interconnections of the integrated circuit chips.
Figure 4. A circuit board, front side.
Figure 5. Circuit board of Figure 4, rear side.
Figures 6A, 6B. Attachment of IC's to a circuit board.
Figure 7. A test structure.
Figures 8A, 8B. A computer reset structure.
Figure 9. A border plate, display and keyboard.
Identical reference numbers in various figures refer to identical or similar structures.

DETAILED DESCRIPTION OF SOME PREFERRED EMBODIMENTS

Overview of System Components

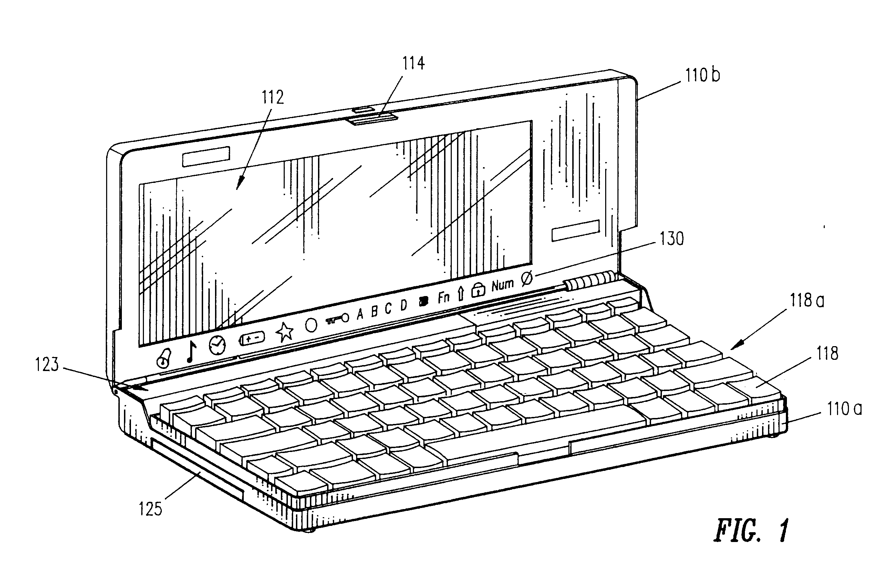

Fig. 1 shows a perspective view of the computer showing upper case 110b, lower case 110a, display 112, display frame 113, keyboard 118, key plate 118a, battery cover 123, hinge 111, latch 114, memory card tray 125, and display indicator graphics 130.

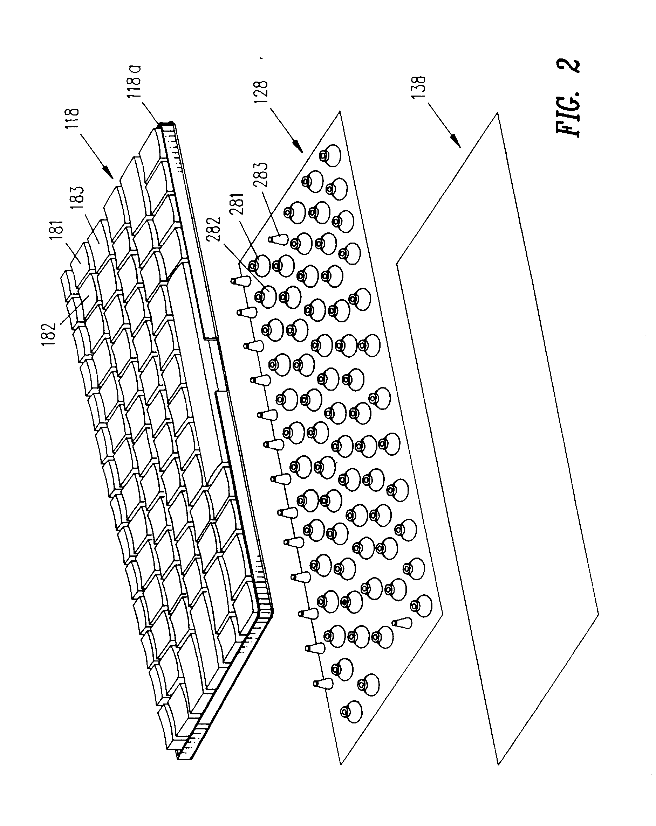

Fig. 2 shows an exploded view of the computer keyboard 118 showing keyplate 118a with keys such as 181, 182, and 183, membrane 128 with cones such as 281, 282, and 283 each holding a conductive pad (not shown), and printed circuit board 138.

Membrane 128 is elastomeric, and protrudes upward in a plurality of locations to form a plurality of elastomeric cones, one beneath each key, for example cones 281, 282, and 283 beneath keys 181, 182, and 183 respectively. Each cone is truncated at a flat (or relatively flat) upper surface which is contacted by an underside of its corresponding key. Extending downward from the flat upper surface of each of the elastomeric cones into the interior of the respective cone is an elastomeric conductive pill. When a key is pressed, its corresponding cone is compressed, moving its corresponding pill into position to span conductive traces (not shown) on the printed circuit board 138.

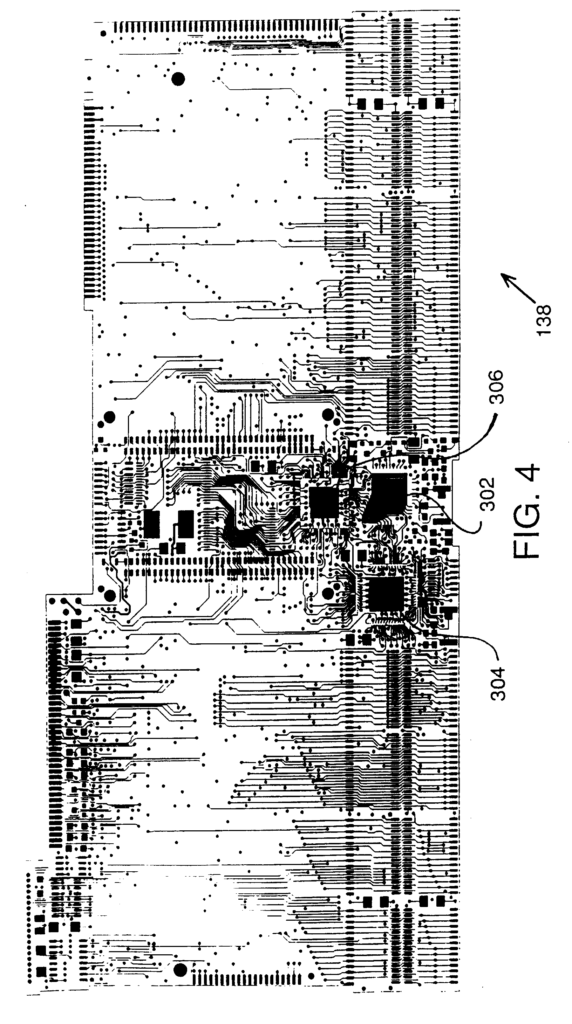

Figure 4 shows a first side of the printed circuit board 138 including IC chip mounting areas 302, 304, 306.

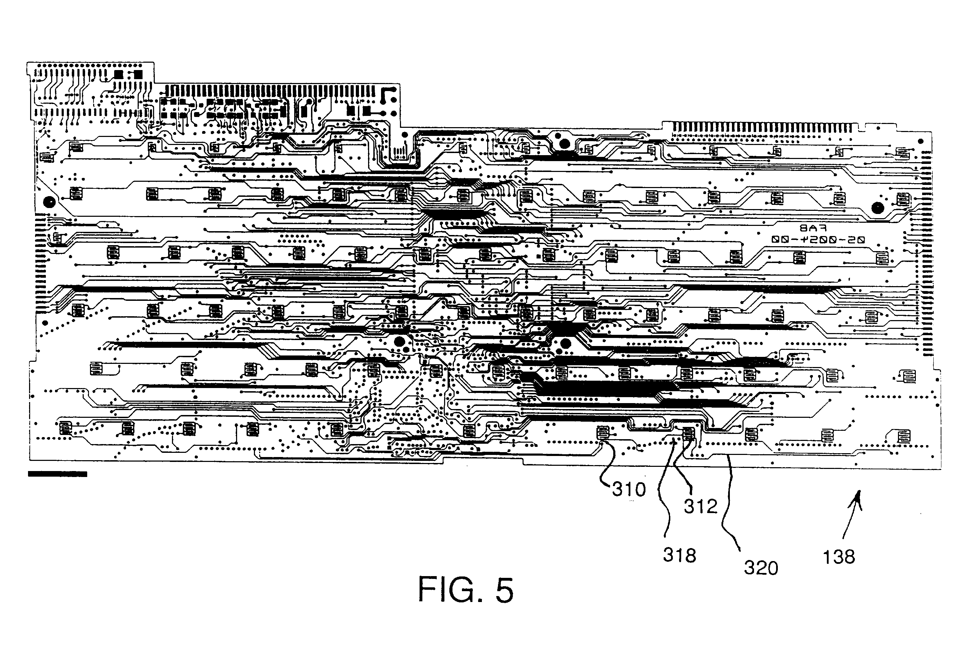

Figure 5 shows the rear (i.e., second) side of the printed circuit board 138 including key contacts such as 310, 312, etc. to which conductive traces such as 318, 320, etc. are connected.

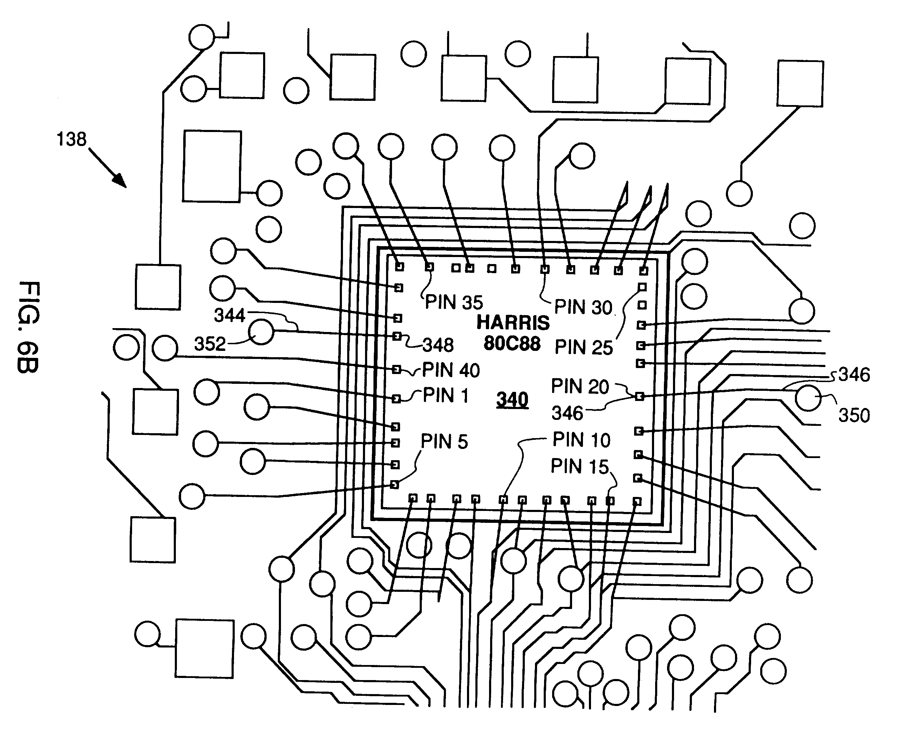

Figure 6A shows in a side view how one IC chip 340 is electrically connected to printed circuit board 138 by bond wires 342, 344, etc. from pins 346, 348, etc. on chip 340 to bonding pads 350, 352 on printed circuit board 138. IC chips such as 340 thus preferably do not have the usual lead frame packaging. Figure 6B shows a top view of Figure 6A.

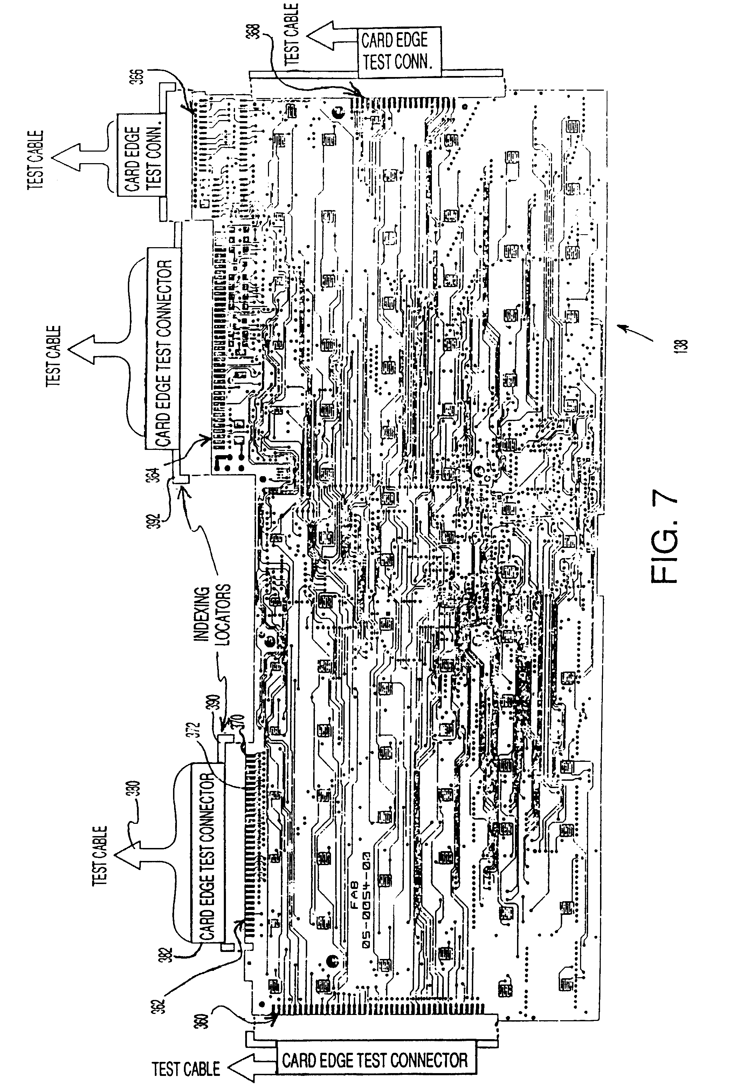

Figure 7 shows a test structure as provided on printed circuit board 138. As shown, five separate test interconnect areas are provided, 360, 362, 364, 366, 368, each consisting of several pads such as 370, 372 to which test signals are provided by test cables such as 380. Test cable 380 is connected to printed circuit board 138 only when testing is to be performed. Card edge test connector 382 connects test cable 380 to the pads 370, 372, etc. As shown, indicating locator such as 390, 392 are provided as cut outs in the edge of printed circuit board 138 to locate the card edge test connectors such as 382. Note that as shown in Figures 4 and 5, such a test structure is provided on both sides of printed circuit board 138.

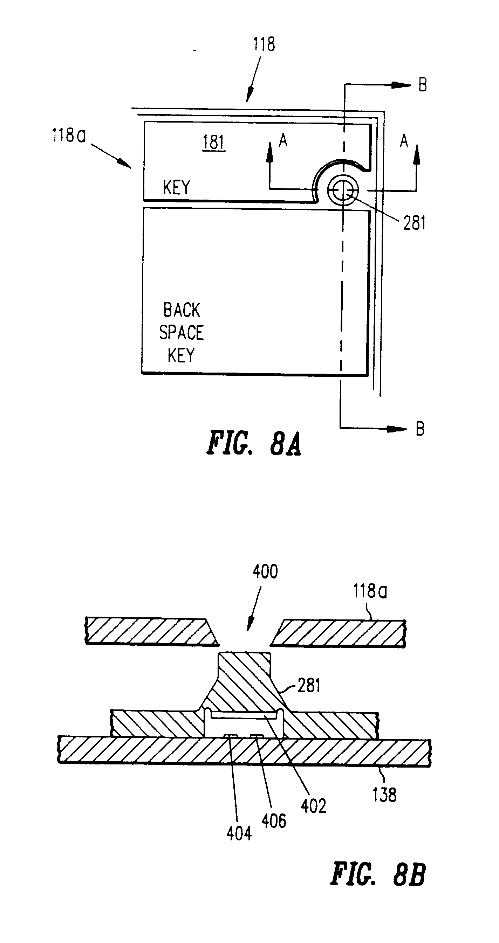

Figure 8A shows a top view including dimensions of a portion of the keyboard 118 of the computer showing key 181 in keyplate 118a. Key 181 is partly cut away to expose cone 281.

Figure 8B shows a cross-sectional view along line B-B in Figure 8A. As shown in Figure 8B (key 181 not shown) a corresponding gap 400 has been left in keyplate 118a exposing cone 281. Thus it is possible to press down on cone 281 with an object (such as a pencil point) through gap 400. Preferably this is done to reset the computer, by compressing conductive pill 402 against traces 404, 406 on printed circuit board 138.

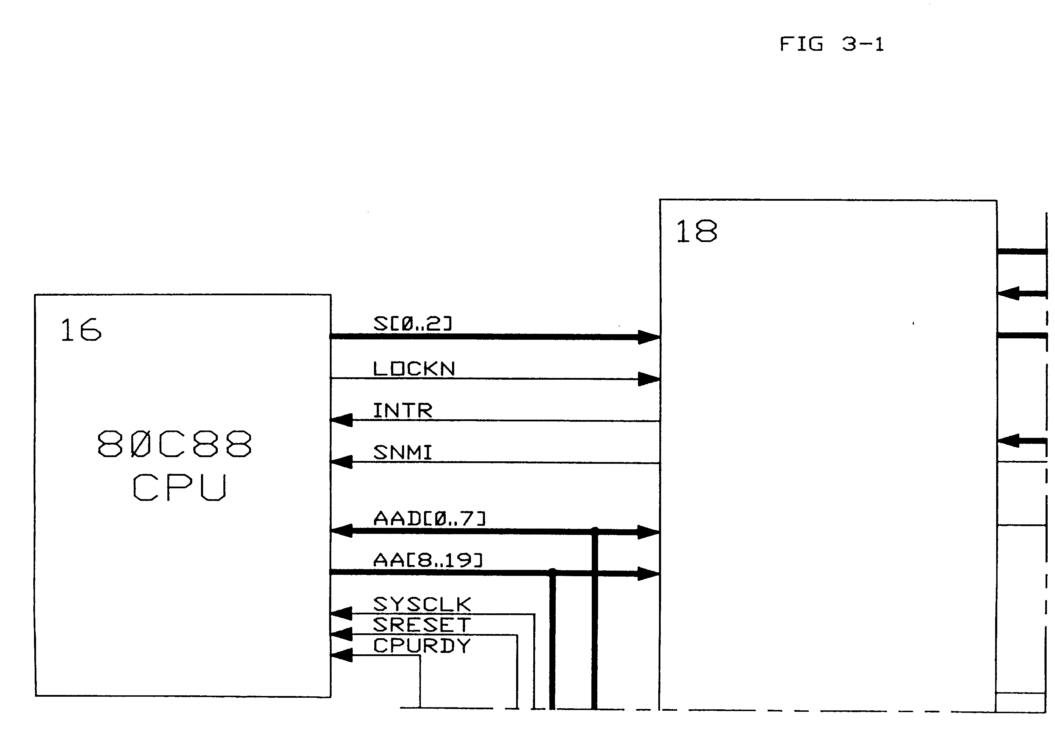

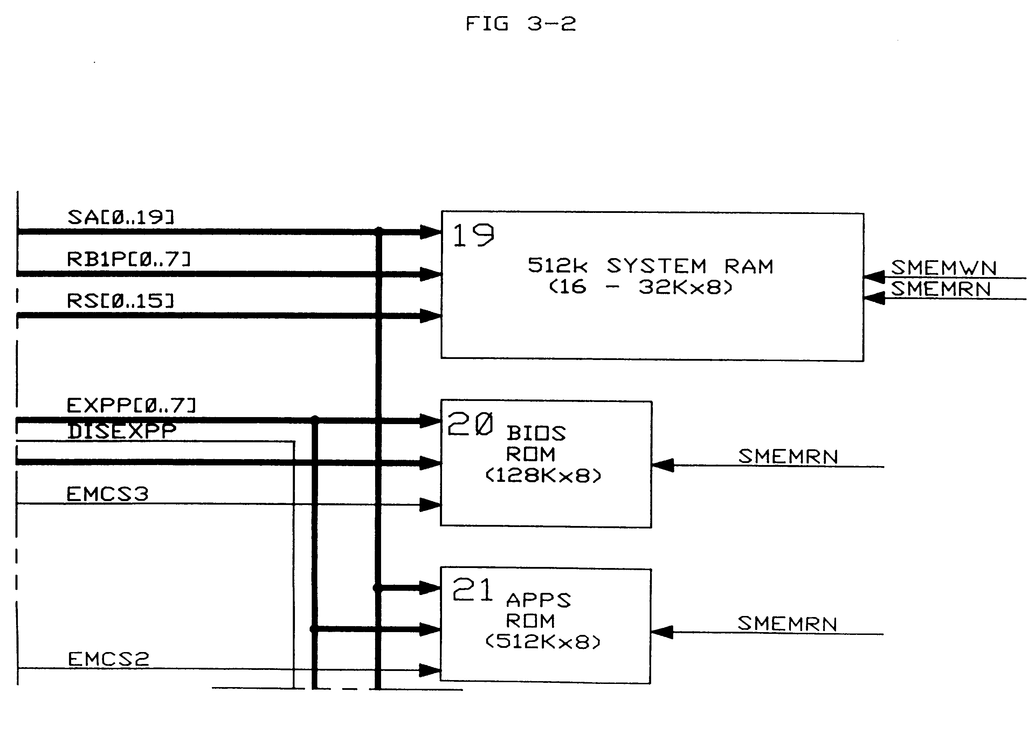

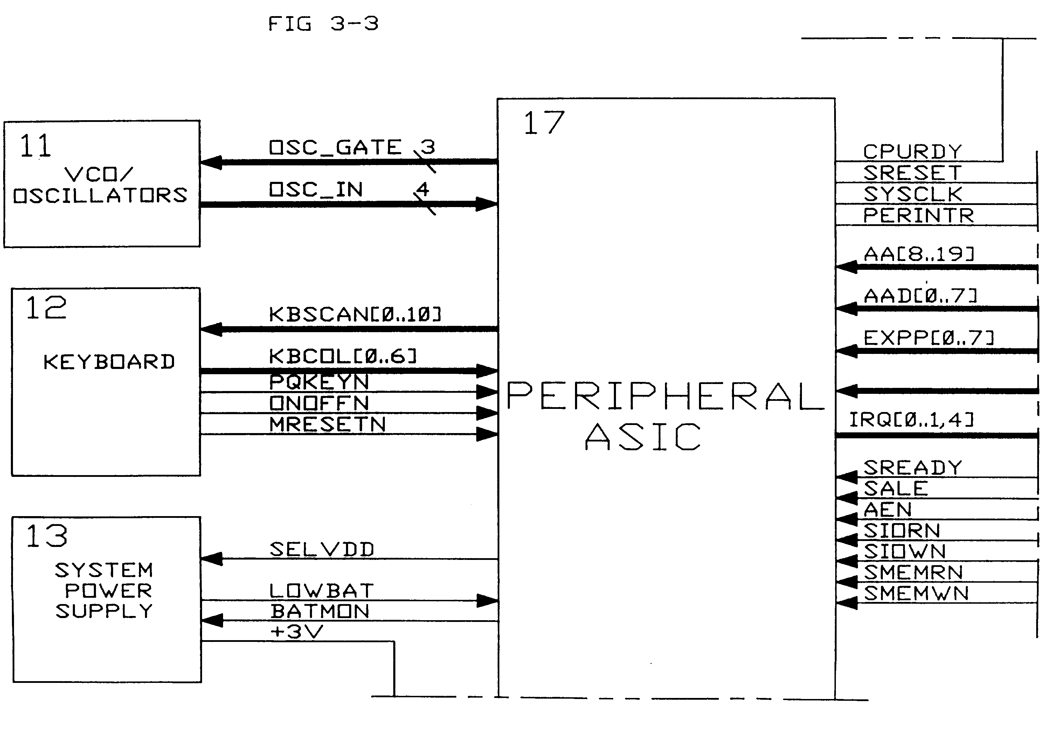

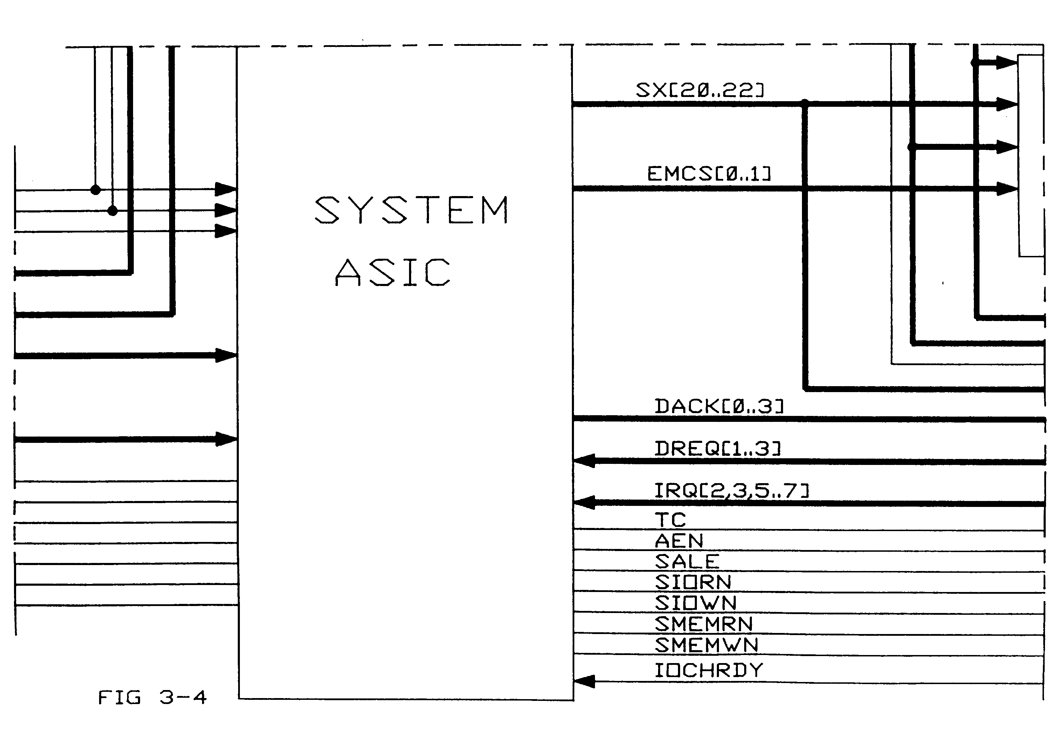

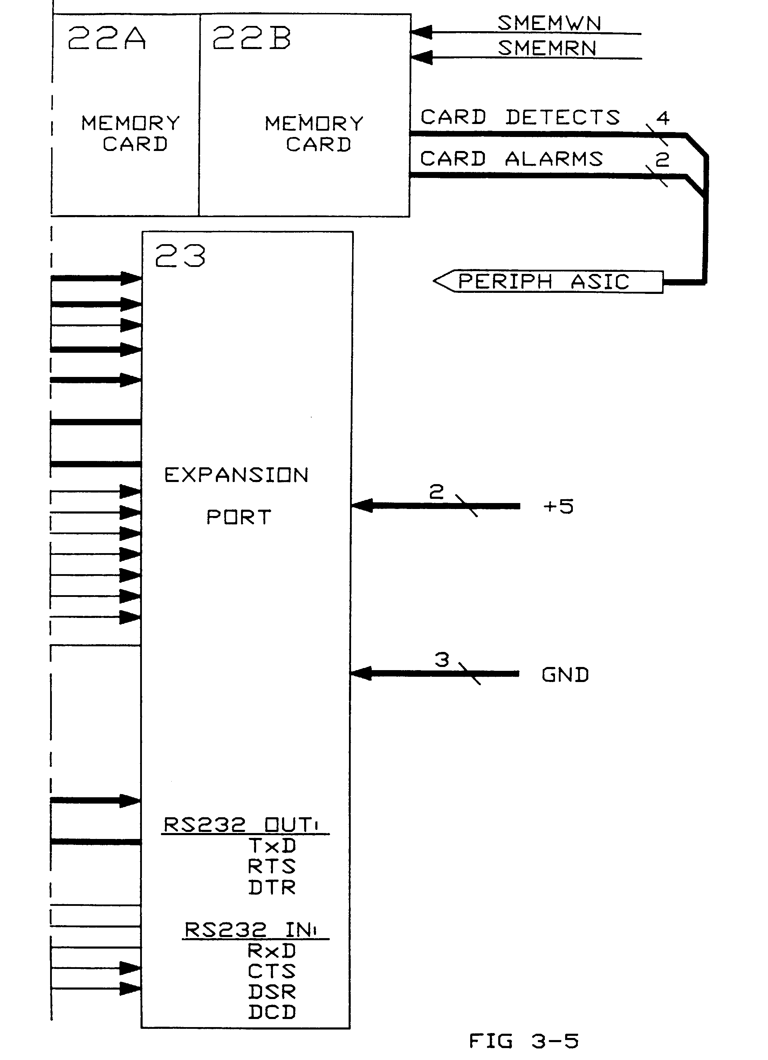

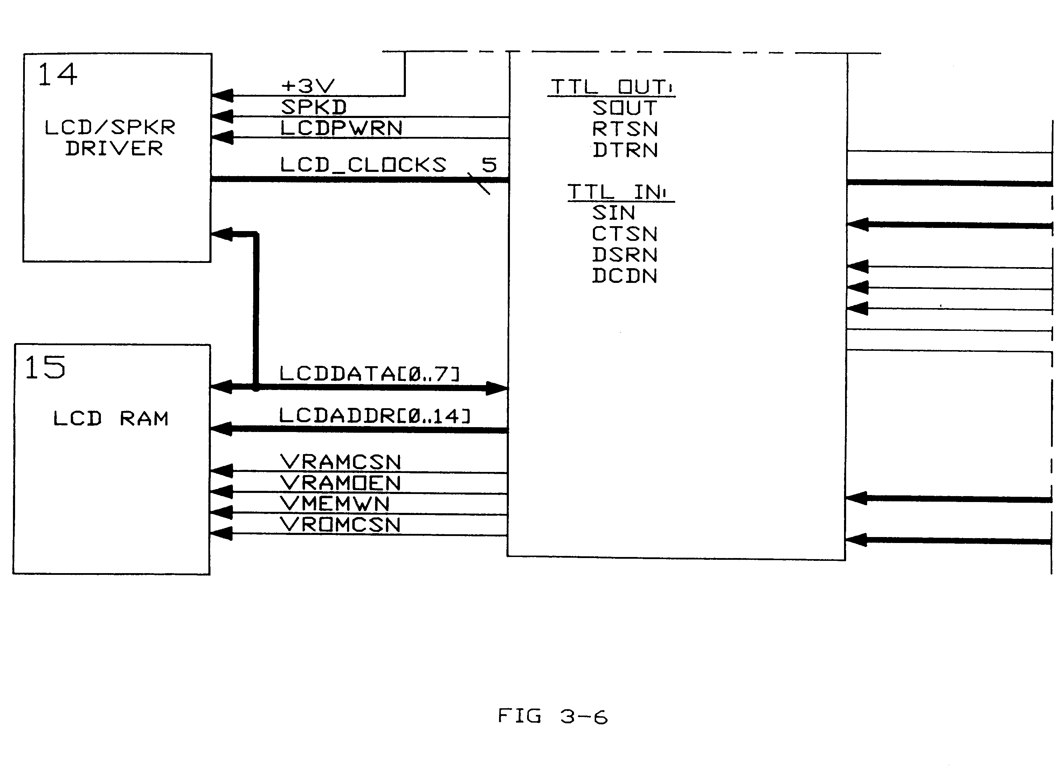

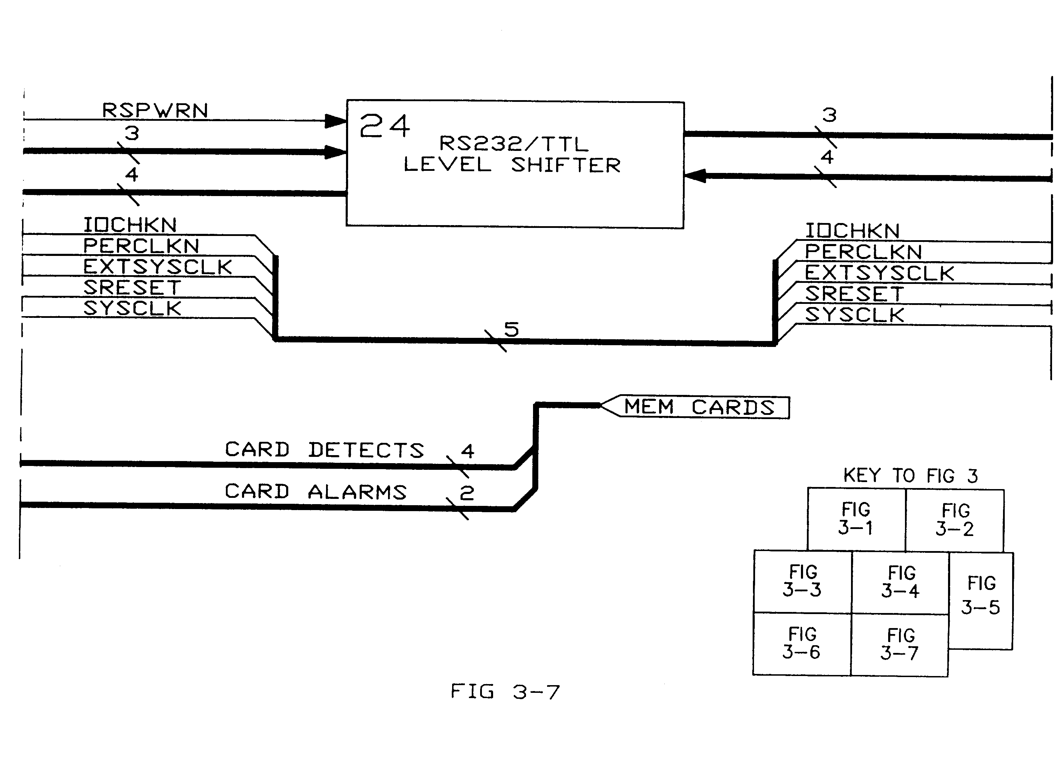

Fig. 3 shows a chip architecture computer system diagram showing interconnections of the integrated circuit chips physically shown in Fig. 4 plus the LCD driver chips located in the upper case and not shown in Fig. 4.

The system of Fig. 3 includes an 80C88 microprocessor 16, a Peripheral ASIC chip 17, a System ASIC chip 18, and an LCD RAM 15, all physically located on a PCB board. This small combination of integrated circuit chips models in one embodiment an IBM XT computer. It may model other computers in other embodiments. They are physically located in the lower portion of the computer casing beneath the keyboard. Also physically located in the lower portion of the case is 512K of system RAM 19, a BIOS ROM chip 20, an application ROM chip 21, one or two memory cards 22a and 22b, and expansion port 23, and UART driver chip 24. VCO and other oscillators 11, and system power supply 13 (which in a preferred embodiment includes two AA batteries) are also located in the lower portion of the case in addition to keyboard 12.

Located in the upper portion of the case is the LCD display, an optional audio transducer, and a separate power supply.

Display driver 14 includes row and column drivers and the analog power supply plus a unique display scan technique which lowers power. The entire system was designed to lower power. In particular, oscillators 11 require low power because they can be turned off when not actively used, a unique feature. The majority of the digital logic is CMOS, including memory 19, BIOS 20, application ROM 21. These draw microamps in the standby state and up to 100 milliamps in operation.

On the reverse side of the PC board is the lower level of the keyboard unit. The contact lines of the keyboard are applied directly to the reverse side of the PC board.

Following is a list of the blocks and lines shown in Fig. 3.

BLOCK 11

VCO/OSCILLATORS. This block contains all of the frequency oscillators used in the system. They include a display clock oscillator running at about 800 KHz, a communications clock oscillator running at 1.8432 MHz, a low frequency oscillator running at 32,768 Hz, and a voltage controlled oscillator (VCO) which operates between 1 and 8 MHz.

There are four oscillators. The oscillator which drives the Processor 16 is voltage controlled, so if there is a sag in the supplied voltage, the frequency will drop to compensate for the lower performance of the CMOS circuits. This also allows the processor speed to be automatically adjusted when the system power supply changes output voltages. At 5 volts all components will run at 8 MHz. At 3 volts they would not run at 8 MHz but at 2 MHz the system will run. There is a power advantage to running at 3 volts because

$$P = C * V^2 * F$$

in a CMOS system where P is power, C is a constant, V is voltage, and F is frequency. So changing voltage from 5 volts to 3 volts gives almost a 3:1 power savings. Also, reducing the frequency from 8 MHz to 2 MHz also conserves power.

In a preferred embodiment there are actually two modes, 5 volts and automatic. In automatic mode, the system moves after a delay from 3 volts to 5 volts when power demand is heavier. When current exceeds a certain level, preferably between 1 and 10 milliamps, the system moves to 5 volts. The novel system for moving between two voltage levels is described in detail in commonly assigned U.S. application serial no. 07/374,514 (US-A-5 021 679) invented by John P. Fairbanks and Andy C. Yuan, entitled "VOLTAGE MANAGEMENT SYSTEMS FOR MULTIPLE VOLTAGE POWER SUPPLY".

OSC IN

These four lines provide the oscillator outputs from block 11 to the Peripheral ASIC 17 for distribution to other parts of the system.

OSC GATE

These three lines provide control signals from Peripheral ASIC 17 to block 11 to enable the respective oscillators. These signals are used to enable or disable the oscillators in block 11. There are only three enable signals because the low frequency oscillator is always running.

BLOCK 12

KEYBOARD. This is a standard matrix keyboard arranged in a 7x11 matrix of columns and rows. When a key is pressed, it completes the circuit between a selected row and column. The rows and columns are scanned by the keyboard control circuits within the Peripheral ASIC 17.
A novel feature of Keyboard 12 is that fewer lines are needed between keyboard 12 and ASIC 17. Controller 17 uses only 7 return lines and 11 scan lines for a total of 18 lines to keyboard 12. Conventional keyboards use about 26 lines. Also unlike typical personal computers of today, no chip is dedicated as a keyboard controller. All keyboard control occurs in ASIC 17. Saving a chip saves power and board space.

KBSCAN[0..10]

These are the keyboard matrix 12 scan lines. The keyboard control circuits within the Peripheral ASIC 17 send out a scan signal on each of these lines individually and monitor the KBCOL[0..6] lines for a signal return.

KBCOL[0..6]

These are the keyboard matrix 12 column lines. These lines are monitored during keyboard scanning for a signal which would indicate that a key is pressed providing a path from one of the KBSCAN[0..10] lines to one of the KBCOL[0..6] lines.

POKEYN

This is a line from the keyboard 12 which is associated with specially labeled key. When this key is pressed, it provides a path to ground causing a low signal on this line. When said key is not pressed there is no path to ground. The line is pulled up to VDD to assure that its default state is high. This signal is monitored by the Peripheral ASIC 17 and may interact with software running on the processor 16.

ONOFFN

This is a line from keyboard 12 which is associated with a special key used to turn the computer on and off.

When this key is pressed, it provides a path to ground causing a low signal on this line. Otherwise the line is pulled up to VDD to assure that its default state is high. This signal is monitored by the Peripheral ASIC 17 and may interact with software running on the processor $_{16}$.

## MRESETN

This is a line from the keyboard 12 which is associated with the reset opening in the keyboard. When this contact is connected by inserting a pointed object into the opening, it provides a path to ground causing a low signal on the line. This signal is monitored by the Peripheral ASIC 17 which resets the computer when a low transition is detected.

## BLOCK 13

SYSTEM POWER SUPPLY. This is the power supply for the majority of the circuits within the computer. One notable exception is the display which has its own power supply located within block 14 as described above. This power supply includes the power source, namely two AA-size batteries, and necessary circuits to provide needed voltages and current for the computer.

## SELVDD

This signal into block 13 is used to select from two possible supply modes: high voltage output (SELVDD= Low), and automatic mode (SELVDD=Tristate). In another embodiment a low level output on this line forces the power supply into a low voltage mode. In the current embodiment, low voltage is three volts, and high voltage is five volts. In automatic mode, current demand is sensed, and when it passes a predetermined threshold, approximately 20 milliamperes in the current embodiment, it moves the voltage output from low to high voltage after a programmed delay. This signal is controlled by a bit within the Peripheral ASIC 17 allowing software to select between the high voltage and automatic modes of power supply operation.

## LOWBAT

This signal from block 13 to the Peripheral ASIC is used to monitor the voltage of the system batteries. It is low to indicate that batteries are above a predetermined threshold (see discussion of BATMON), and goes high when these batteries fall below the threshold. This signal is monitored by the Peripheral ASIC 17 and may interact with software running on the processor 16. Since software running on the processor is able to monitor the real time condition of the batteries and determine when the batteries are about to expire, the BIOS will refuse to move from the off state when it is determined that doing so would jeopardize the integrity of the system memory and processor states.

## BATMON

This signal is used by the battery voltage monitor circuits in 13. The signal can be manipulated by the processor 16 to set the threshold at which LOWBAT will change states. When BATMON is high, the threshold is 1.8 volts. When it is low, the threshold is 1.6 volts. This is used to sense low and dead battery conditions.

## VBAT

This is the battery voltage from the computer batteries which is used by the circuits and power supply within block 14 and ranges between 1.6 and 1.3 volts.

## SPKD

This is the signal from Peripheral ASIC 17 to the drive circuits of the audio transducer within 14. This signal is controlled by a bit within the Peripheral ASIC 17 which can be manipulated by the processor.

## LCDPWRN

This signal controls the LCD power supply within 14. When it is low, the power supply is enabled and running. When it is high, the power supply is disabled and producing no output. This signal is controlled by a bit within the Peripheral ASIC 17 which can be manipulated by the processor.

LCD CLOCKS

These five signals are used to clock the LCD driver chips within 14. They are generated by the display drive refresh circuits within the Peripheral ASIC 17.

BLOCK 14

VIDEO DISPLAY. This block contains the LCD display driver circuits, the display power supply, the LCD screen, an audio transducer, and drive circuits for the audio transducer.

LCD driver 14 and LCD RAM 15 control a liquid crystal display screen which is used in an embodiment of the present invention. LCD driver 14 is described in commonly assigned U.S. patent application serial no. 07/374,340 (US-A-5 130 703) invented by John P. Fairbanks, Andy C. Yuan, and Lance T. Klinger entitled "POWER SYSTEM AND SCAN METHOD FOR LIQUID CRYSTAL DISPLAY".

BLOCK 15

THE LCD RAM 15 is described in commonly assigned U.S. patent application serial no. 07/374,884 (WO91/00587) invented by Leroy D. Harper, John W. Corbett, Douglas A. Hooks, Grayson C. Schlichting, Renee D. Bader, and John P. Fairbanks entitled "VIDEO IMAGE CONTROLLER FOR LOWER POWER COMPUTER". LCD RAM 15 receives information about characters or graphic images to be displayed on the LCD screen. LCD RAM 15 includes a character memory which stores an ASCII representation and display attribute for each display character position, bit map images of each character in the character set currently in use, and a bit map memory where each display pixel on the LCD display is represented. A look-up table is also stored which is used by the display controller located within the Peripheral ASIC 17. Additional memory is provided which can be used as nonvolatile data storage. LCD RAM 15 includes two 32K x 8 static RAM chips. These chips store character and attribute data, LCD bit map data, character bit map data, and character translation data.

LCDDATA[0..7]

These are the data lines between the display controller within the Peripheral ASIC 17 and both the LCD RAM 15 and the LCD driver chips located within display driver 14. Data is sent from Peripheral ASIC 17 to display driver 14 during display refresh cycles in order to update data in the driver chips which is ultimately displayed on the LCD display. A two way path exists between Peripheral ASIC 17 and LCD RAM 15 and is used when the display driver circuits in Peripheral ASIC 17 read and write data in the two RAM chips 15.

LCDADDR[0..14]

These are the address lines used to access the two RAM chips in LCD RAM 15. The addresses are generated by display control circuits within Peripheral ASIC 17.

VRAMCSN

This signal line from the display control circuits within Peripheral ASIC 17 is used to chip select one of the two RAM chips within LCD RAM 15. Specifically, this line selects the RAM used to store character, attribute, and LCD bit map data. This line is connected to the chip select pin on the RAM chips in LCD RAM 15.

VRAMOEN

This signal line from the display control circuits within Peripheral ASIC 17 is used to enable the currently selected RAM chip within LCD RAM 15 (see discussion of VRAMCSN and VROMCSN) to drive data from the memory location specified by LCDADDR[0..14] onto the data bus LCDDATA[0..7].

VMEMWN

This signal line from the display control circuits within Peripheral ASIC 17 causes the currently selected RAM chip within LCD RAM 15 (see discussion of VRAMCSN and VROMCSN) to latch the data on LCDDATA[0..7] into the address specified by LCDADDR[0..14].

VROMCSN

This signal line from the display control circuits within Peripheral ASIC 17 is used to chip select one of the two RAM chips within LCD RAM 15. Specifically, this line selects the RAM used to store character bit maps and translation address data. It is connected to the chip select pin on the RAM chips within LCD RAM 15.

BLOCK 16

80C88 CPU. This is the processor on which the architecture of the computer is based. It may be purchased from Intel Corporation, Harris Semiconductor, or OKI Semiconductor.

S[0..2]

These are processor status pins of microprocessor 16 and are connected to the 8288 compatible Bus Controller cell located with the System ASIC 18. Their function is detailed in the data sheet of both the 80C88 and 8288 components available from Intel Corporation.

LOCKN

This is the processor pin LOCK from processor 16 and is connected to the System ASIC 18.

INTR

This is the processor pin INTR which is used to generate interrupts. It is connected to the 8259 compatible Programmable Interrupt Controller cell located within the System ASIC 18. The function of this signal is detailed in the data sheet of both the 80C88 and 8259 components available from Intel Corporation.

SNMI

This signal line is connected to the NMI (non maskable interrupt) pin of the processor 16. A signal on this line is generated by the System ASIC 18 and is the processor 16 non-maskable interrupt. The term nonmaskable interrupt indicates the interrupt cannot be masked by the microprocessor 16. This interrupt can be masked by circuits external to microprocessor 16.

AAD[0..7]

Processor 16 address data bus lines. These lines are the multiplexed address and data bus of the processor and connect to the peripheral ASIC 17 and the 8288 compatible Bus Controller cell located with the System ASIC 18. Their function is detailed in the data sheet of both the 80C88 and 8288 components available from Intel Corporation.

AA[8..19]

These are the high order processor 16 address lines. They are connected to both the circuits within the Peripheral ASIC 17, and the 8288 compatible Bus Controller cell located within the System ASIC 18. Their function is detailed in the data sheet of both the 80C88 and 8288 components available from Intel Corporation.

SYSCLK

This is the system clock signal line used to clock both the processor 16 and circuits within the System ASIC 18. The system clock signal is generated within the Peripheral ASIC 17 (where it is also used) and is derived either from the VCO oscillator located in block 11 or from an external source provided on line EXTSYSCLK.

CPURDY

This is the READY signal line on the processor 16 and is used to extend processor 16 read and write operations to allow slower devices to interface with the processor 16. The signal on this line comes from the Peripheral ASIC 17. Circuits within the Peripheral ASIC 17, the System ASIC 18 (see SREADY), or external devices connected through the Expansion Port 23 (see IOCHRDY) may use this line to synchronize data transfer with the processor 16.

BLOCK 17

PERIPHERAL ASIC

This is one of two ASIC chips preferably used in an embodiment of the present invention. PERIPHERAL ASIC 17 is the interface between the processor and peripheral devices, including keyboard 12, system power supply 13, LCD display driver 14, and LCD RAM 15. It also interfaces to oscillators 11 and turns them on and off under software control.

The PERIPHERAL ASIC is designed to interface to a 11 row by 7 column matrix keyboard. The keyboard controller scans the keys by driving a single row low (to 0) and sampling the column inputs. If a key is down, the controller determines whether it is a new push or the key is just being held down. If it is a new push, the controller will generate the appropriate scan code and interrupt the processor via interrupt request, IRQ1. The controller will then suspend sampling until the interrupt is cleared by writing a one followed by a zero to bit 7 of port 0061h. Scan codes are read from port 0060h. Table 1 lists the scan code returned for each key in the 11 x 7 matrix. If no key is pushed the controller will continuously scan the keyboard until a key is detected. If the last key pushed is held for a sufficient amount of time, the controller will repeatedly interrupt the processor. Keyboard repeat times are broken into two classifications, the time before the first repeat interrupt, and the time for subsequent repeat interrupts. Repeat times may be programmed by writing to bits 4 - 7 of port F6E0h. Table 2 shows the corresponding repeat times for values written to port F6E0h.

The keyboard controller runs off a 32.768 Khz clock, with each row being scanned approximately 256 times a second. Keyboard scanning may be halted by writing a one to bit 6 of port 0061h. Writing a zero back to bit 6 of port 0061h will resume scanning where the controller left off.

The keyboard controller modifies the scan codes of certain keys depending upon the level of the PQKEYN input. This input, which is grounded when its corresponding key is pushed, will cause certain keys to return an alternate scan code. Table 1 lists the scan codes of those keys affected by the PQKEYN input. Table 2 lists keyboard repeat speeds.

TABLE 1

| KEYBOARD SCAN CODES (HEX) | | | | | | | |
|---|---|---|---|---|---|---|---|
| ROW # | COL 0 | COL 1 | COL 2 | COL 3 | COL 4 | COL 5 | COL 6 |
| ROW 0 | | | | | | | |
| KEY | UP-ARW | R-SH | J | ALT | F | : | NULL |
| NM CODE | 48 | 36 | 24 | 38 | 21 | 27 | 00 |
| PQ CODE | 49 | 36 | 24 | 38 | 21 | 4E | 00 |
| ROW 1 | | | | | | | |
| KEY | RTN | SP | DN-ARW | L | Z | H | INS |
| NM CODE | 1C | 39 | 50 | 26 | 2C | 23 | 52 |
| PQ CODE | 4C | 39 | 51 | 26 | 2C | 23 | 52 |
| ROW 2 | | | | | | | |
| KEY | D | K | G | ' | R-ARW | DEL | L-ARW |
| NM CODE | 20 | 25 | 22 | 28 | 4D | 53 | 4B |
| PQ CODE | 20 | 25 | 22 | 28 | 4F | 53 | 47 |
| ROW 3 | | | | | | | |
| KEY | CTL | U | P | X | B | , | NULL |
| NM CODE | 1D | 16 | 19 | 2D | 30 | 33 | 00 |
| PQ CODE | 1D | 16 | 4A | 2D | 30 | 33 | 00 |
| ROW 4 | | | | | | | |
| KEY | O | ] | C | N | . | CAP | A |
| NM CODE | 18 | 1B | 2E | 31 | 34 | 3A | 1E |
| PQ CODE | 18 | 1B | 2E | 31 | 34 | 3A | 1E |

TABLE 1   (continued)

| KEYBOARD SCAN CODES (HEX) | | | | | | | |
|---|---|---|---|---|---|---|---|
| ROW # | COL 0 | COL 1 | COL 2 | COL 3 | COL 4 | COL 5 | COL 6 |
| ROW 5 | | | | | | | |
| KEY | [ | S | L-SH | V | M | I | / |
| NM CODE | 1A | 1F | 2A | 2F | 32 | 17 | 35 |
| PQ CODE | 1A | 1F | 2A | 2F | 32 | 17 | 35 |
| ROW 6 | | | | | | | |
| KEY | F2 | F5 | F8 | \ | E | TAB | Y |
| NM CODE | 3C | 3F | 42 | 2B | 12 | 0F | 15 |
| PQ CODE | 3C | 3F | 42 | 2B | 12 | 0F | 15 |
| ROW 7 | | | | | | | |
| KEY | F10 | F1 | SCR | F4 | Q | F7 | R |
| NM CODE | 44 | 3B | 46 | 3E | 10 | 41 | 13 |
| PQ CODE | 45 | 3B | 46 | 3E | 10 | 41 | 13 |
| ROW 8 | | | | | | | |
| KEY | 1 | 3 | 7 | 9 | - | 5 | = |
| NM CODE | 02 | 04 | 08 | 0A | 0C | 06 | 0D |
| PQ CODE | 02 | 04 | 08 | 0A | 0C | 06 | 0D |
| ROW 9 | | | | | | | |
| KEY | 4 | ' | 2 | 6 | 8 | BK-SP | 0 |
| NM CODE | 05 | 29 | 03 | 07 | 09 | 0E | 0B |
| PQ CODE | 05 | 29 | 03 | 07 | 09 | 0E | 0B |
| ROW 10 | | | | | | | |
| KEY | ESC | T | F3 | W | F6 | PSCR | F9 |
| NM CODE | 01 | 14 | 3D | 11 | 40 | 37 | 43 |
| PQ CODE | 01 | 14 | 3D | 11 | 40 | 37 | 43 |

TABLE 2

| KEYBOARD REPEAT SPEEDS | | |
|---|---|---|
| PORT BITS | VALUE | DESCRIPTION |
| F6E0 4-5 | 0 | Initial repeat time of 625 ms. |
| 4-5 | 1 | Initial repeat time of 375 ms. |
| 4-5 | 2 | Initial repeat time of 281 ms. |
| 4-5 | 3 | Initial repeat time of 187 ms. |
| 6-7 | 0 | Subsequent repeat interval of 281 ms. |
| 6-7 | 1 | Subsequent repeat interval of 187 ms. |
| 6-7 | 2 | Subsequent repeat interval of 94 ms. |
| 6-7 | 3 | Subsequent repeat interval of 47 ms. |

The PERIPHERAL ASIC includes a MDA and CGA compatible display controller. It generates all needed signals, as well as refresh data to drive a 640 x 200 pixel LCD (liquid crystal display). The display controller in the PERIPHERAL ASIC may be disabled, allowing for an external controller by writing a one to bit 1 of port F6E1h. The PERIPHERAL ASIC's display controller is enabled upon reset.

The PERIPHERAL ASIC's display controller may respond as either an MDA or a CGA video adapter. Writing a 0/1 to port F6E1 will select MDA/CGA compatibility. The display controller is in MDA mode upon reset.

The PERIPHERAL ASIC includes many features for managing power consumption including the ability to power down and disable parts of the machine and stop clocks. Included is the ability to determine when to disable features. To do this, four special NMI's are generated. The first NMI interrupts the processor when timer interrupt requests, IRQ0, have occurred. This give the BIOS the capability of timing events even when the normal timer interrupt vector has been stolen. The second NMI is generated on keyboard interrupt requests, IRQ1. These are used to monitor keyboard input and to allow support for special function keys not supported in the hardware. The third NMI is an interrupt when memory address 00058h has been read. This is an indication that the INT16h software interrupt has been called. This is used to determine if the system is idle. Once the software has determined that the machine is idle, it may disable certain computer functions using special I/O ports, thus lowering power consumption. The final and most powerful NMI is the On/off key input. This comes from a key on the keyboard that notifies the BIOS that the user wishes to turn the system off. Lower power techniques using these features are disclosed in commonly assigned U.S. application serial no. 07/373,440, (US-A-5 428 790) invented by Leroy D. Harper, et al., entitled COMPUTER POWER MANAGEMENT SYSTEM, attorney docket no. M-924.

The processor clock may be disabled with a write to port F6ECh bit 6 with a zero followed by a one. The clock will stop low in the middle of the last I/O write cycle and remain low until an interrupt wakes it. An IRQO, IRQ1, IRQ4, or NMI may wake the system, if enabled. Each NMI has a mask bit in a special register and the IRQ's have a separate clock mask bit that will mask it from waking the processor, but not mask the interrupt request line from becoming active. The UART clock may be stopped by writing a one to bit 7 of port F6ECh. The charge pump on the RS-232 compatible drivers may be disabled by writing a one to bit 5 of port F6ECh. The LCD display can be turned off by writing a one to bit 3 of port F6ECh. This also stops the display clock, refreshing, contrast and all associated signals. Finally, the power supply voltage may be set to 5 Volts with a write of a zero to bit 2 of port F6ECh. This output will go to high impedance with a write of a one to bit 4 of port F6ECh forcing the power supply into automatic mode. In this mode, the power supply voltage will be set based on current consumption.

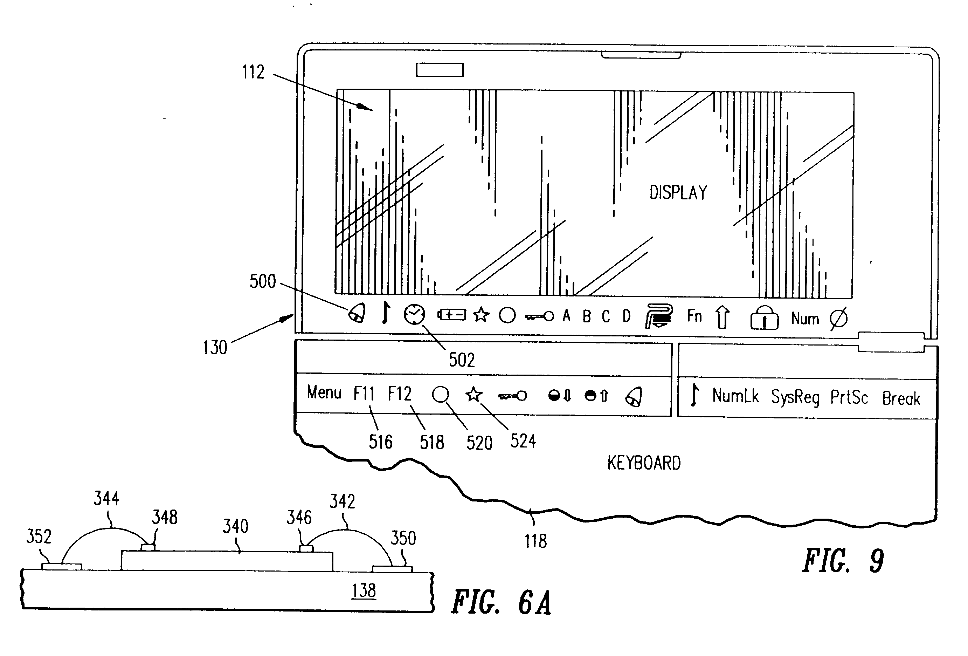

The computer also includes a second set of symbols such as 516, 518, 520, 524 as shown in Figure 9 imprinted on a margin of the keyboard 118. These symbols such as 516, 518, 520, 524 describe the functions of an adjacent row of keyboard function keys (not shown). In one embodiment, four symbols in four different colors are provided adjacent each function key. Keys for "shift", "alt", "ctrl", and a special logo key (not shown) are correspondingly colored to indicate that simultaneously pressing the "shift", "alt", "ctrl", or the special logo key with the adjacent function key produces the functions noted in color by the symbol 502, 504, etc., adjacent to the function key.

The above description of the invention is illustrative and not limiting; further embodiments will be apparent in light of the invention as defined in the claims.

## Claims

1. A compact portable computer including a keyboard (118) which comprises: a keyplate (118a) having a plurality of keys (181,182,183); and a printed circuit board (138) underlying and held in a spaced relation to said keyplate (118a), said printed circuit board (138) having two surfaces, a first surface bearing traces (318,320) for detecting key presses of the keys (181,182,183) of the keyplate (118a), and an opposing second surface having most of the integrated circuit components (340) of the computer mounted thereon, thereby providing a compact portable computer keyboard.

2. A compact portable computer according to Claim 1, wherein the keyboard (118) further comprises: a membrane (128) underlying and held in fixed relation to the keyplate (118a) and having formed on one surface thereof a plurality of cones (281,282,283), one beneath each key (181,182,183), each cone (281,282,283) having a flat upper surface for contact by the overlying key (181,182,183), and each cone (281,282,283) including an elastomeric conductive body inside the cone (281,282,283), the printed circuit board (118a) underlying the membrane (128), and at least one pair of traces (318,320) underlying each conductive body.

3. A compact portable computer according to Claim 1 or 2, wherein the integrated circuit components (340) are wire bonded to the printed circuit board (138).

4. A compact portable computer according to any preceding claim, wherein an additional pair of traces (404,406) are provided for resetting the computer, said additional pair of traces (404,406) being shorted together by a conductor (402) which is moveable into place against the pair of traces (404,406) by an object inserted through an opening (400) in the keyplate (118a), the opening (400) exposing the conductor (402).

5. A compact portable computer according to any preceding claim, wherein said keyboard has at least seventy-seven keys.

**6.** A compact portable computer according to any preceding claim, further comprising a case (110) for holding the keyboard (118), said printed circuit board (138) being held between said case (110) and said keyboard (118) and the keyboard (118) being joined to the case (110) by a weld.

**7.** A compact portable computer according to any preceding claim, wherein the integrated circuit components (340) are unpackaged.

**8.** A compact portable computer according to any preceding claim, wherein the computer comprises a processor for executing an operating system and associated application programs in accordance with a clock signal; and wherein said conductive traces include a pair of on/off traces for causing said computer to toggle between an on state and an off state, said pair of on/off traces being connected upon pressing of an on/off key which moves a conductor against said pair of on/off traces; said off state being a state in which said processor retains its place in a currently executing applications program and said clock signal is supplied to said processor at a low frequency.

**Patentansprüche**

**1.** Kompakter tragbarer Computer mit einer Tastatur (118), die folgende Merkmale aufweist: eine Tastaturplatte (118a) mit mehreren Tasten (181, 182, 183); und eine gedruckte Schaltungsplatte (138), die unter der Tastaturplatte (118a) liegt und mit Abstand zu dieser gehalten ist, wobei die gedruckte Schaltungsplatte (138) zwei Oberflächen aufweist, wobei eine erste Oberfläche Bahnen (318, 320) zum Erfassen des Herabdrückens der Tasten (181, 182, 183) der Tastaturplatte (118a) aufweist, und wobei auf einer zweiten, gegenüberliegenden Oberfläche die meisten der integrierten Schaltungskomponenten (380) des Computers montiert sind, wodurch eine kompakte tragbare Computertastatur vorgesehen wird.

**2.** Kompakter tragbarer Computer nach Anspruch 1, bei dem die Tastatur (318) folgende Merkmale aufweist: eine Membran (128), die unter der Tastaturplatte (118a) liegt und mit Abstand zu dieser gehalten ist, wobei auf einer Seite der Membran mehrere Konusse (281, 282, 283) ausgebildet sind, einer unter jeder Taste (181, 182, 183), wobei jeder Konus (281, 282, 283) eine flache Oberseite für den Kontakt mit der darüberliegenden Taste (181, 182, 183) aufweist und wobei jeder Konus (281, 282, 283) einen elastomeren leitenden Körper innerhalb des Konus (281, 282, 283) aufweist, wobei die gedruckte Schaltungsplatte (118a) unter der Membran (128) liegt und wenigstens ein Paar Bahnen (318, 320) unter jedem leitenden Körper liegen.

**3.** Kompakter tragbarer Computer nach Anspruch 1 oder 2, bei dem die integrierten Schaltungskomponenten (340) mittels Drahtverbindung mit der gedruckten Schaltungsplatte (138) verbunden sind.

**4.** Kompakter tragbarer Computer nach einem der vorangehenden Ansprüche, bei dem ein zusätzliches Paar Bahnen (404, 406) vorgesehen ist, um den Computer zurückzusetzen, wobei das zusätzliche Paar Bahnen (404, 406) von einem Leiter (402) kurzgeschlossen wird, der mit Hilfe eines Gegenstandes, der durch eine Öffnung (400) in der Tastaturplatte (118a) eingefügt wird, in Position bringbar ist, so daß er gegen das Bahnenpaar (404, 406) zu liegen kommt, wobei die Öffnung (400) den Leiter (402) freigibt.

**5.** Kompakter tragbarer Computer nach einem der vorangehenden Ansprüche, bei dem die Tastatur wenigstens siebenundsiebzig Tasten aufweist.

**6.** Kompakter tragbarer Computer nach einem der vorangehenden Ansprüche, mit einem Gehäuse (110) zum Halten der Tastatur (118), wobei die gedruckte Schaltungsplatte (138) zwischen dem Gehäuse (110) und der Tastatur (118) gehalten wird und die Tastatur (118) mittels einer Schweißverbindung mit dem Gehäuse (110) verbunden ist.

**7.** Kompakter tragbarer Computer nach einem der vorangehenden Ansprüche, bei dem die integrierten Schaltungskomponenten (340) gehäuselos sind.

**8.** Kompakter tragbarer Computer nach einem der vorangehenden Ansprüche, bei dem der Computer einen Prozessor zum Ausführen eines Betriebssystem und zugehöriger Anwendungsprogramme abhängig von einem Taktsignal aufweist; und bei dem die leitenden Bahnen zwei Ein/Aus-Bahnen umfassen, um den Computer zwischen einem Ein- und einem Aus-Zustand umzuschalten, wobei das Paar Ein/Aus-Bahnen beim Drücken einer Ein/Aus-Taste, bei dem ein Leiter gegen das Paar Ein/Aus-Bahnen bewegt wird, verbunden werden; wobei der Aus-Zustand ein Zustand ist, in dem der Prozessor in einem momentan laufenden Anwendungsprogramm stehenbleibt und das Taktsignal mit einer niedrigen Frequenz an dem Prozessor angelegt wird.

**Revendications**

1. Un ordinateur portatif compact comportant un clavier (118) qui comprend : une plaque à touches (118a) avec une pluralité de touches (181,182,183); et une plaque à circuit imprimé (138) se trouvant sous la plaque à touches (118a) et maintenue en position fixe par rapport à celle-ci, ladite plaque à circuit imprimé (138) ayant deux surfaces, une première surface portant des lignes conductrices (318, 320) pour détecter les enfoncements des touches (181,182,183) de la plaque à touches (118a), et une seconde surface opposée sur laquelle la plupart des composants (340) à circuit intégré de l'ordinateur sont montés en formant de cette façon un clavier d'ordinateur portatif compact.

2. Un ordinateur portatif compact selon la Revendication 1, dans lequel le clavier (118) comprend également : une membrane (128) se trouvant sous la plaque à touches (118a) et maintenue en position fixe par rapport à celle-ci, et une pluralité de cônes (281,282,283) formés sur une surface de ladite membrane, un cône sous chaque touche (181,182,183), chaque cône ayant une surface supérieure plate de contact avec la touche (181,182,183) qui se trouve au-dessus, et chaque cône (281,282,283) comprenant un corps conducteur en élastomère à l'intérieur du cône (281,282,283), la plaque à circuit imprimé (118a) se trouvant sous la membrane (128), et au moins une paire de lignes conductrices (318,320) se trouvant sous chaque corps conducteur.

3. Un ordinateur portatif compact selon la Revendication 1 ou 2, dans lequel les composants (340) à circuit intégré sont fixés par câblage sur la plaque à circuit imprimé (138).

4. Un ordinateur portatif compact selon une revendication précédente quelconque, dans lequel une paire supplémentaire de lignes conductrices (404,406) sont prévues pour la remise à zéro de l'ordinateur, les lignes conductrices (404,406) de cette paire supplémentaire étant réunies par un conducteur (402) qui peut être amené en place sur la paire de lignes conductrices (404,406) par un objet inséré dans une ouverture (400) de la plaque à touches (118a), l'ouverture (400) exposant le conducteur (402).

5. Un ordinateur portatif compact selon une revendication précédente quelconque, dans lequel ledit clavier comprend au moins soixante dix sept touches.

6. Un ordinateur portatif compact selon une revendication précédente quelconque, comprenant également un boîtier (110) de maintien du clavier (118), ladite plaque à circuit imprimé (138) étant maintenue entre le boîtier (110) et le clavier (118) et le clavier (118) étant réuni au boîtier (110) par une soudure.

7. Un ordinateur portatif compact selon une revendication précédente quelconque, dans lequel les composants (340) à circuit intégré ne sont pas encapsulés.

8. Un ordinateur portatif compact selon une revendication précédente quelconque, dans lequel l'ordinateur comprend un processeur pour exécuter un système opérationnel et des programmes d'application associés en fonction d'un signal d'horloge ; et dans lequel lesdites lignes conductrices comprennent une paire de lignes marche/arrêt pour faire basculer ledit ordinateur entre un état de marche et un état d'arrêt, lesdites lignes de la paire marche/arrêt étant réunies par enfoncement d'une touche marche/arrêt qui déplace un conducteur sur ladite paire de lignes marche/arrêt ; l'état d'arrêt étant un état dans lequel ledit processeur reste en place dans un programme d'application en cours d'exécution et ledit signal d'horloge est fourni audit processeur à une fréquence faible.

FIG. 1

FIG. 2

EP 0 479 915 B1

FIG 3-1

FIG 3-2

FIG 3-3

FIG 3-4

FIG 3-5

FIG 3-6

EP 0 479 915 B1

FIG 3-7

KEY TO FIG 3

| FIG 3-1 | FIG 3-2 |
|---------|---------|
| FIG 3-3 | FIG 3-4 |
| FIG 3-6 | FIG 3-7 |

EP 0 479 915 B1

FIG. 4

138

306

302

304

FIG. 5

346
350
PIN 30
PIN 25
PIN 20
346
PIN 10
PIN 15
HARRIS
80C88
340
PIN 35
348
PIN 40
PIN 1
PIN 5
344
352
138

FIG. 6B

FIG. 7

118

118a

181

KEY

B

A

A

B

281

BACK
SPACE
KEY

B

B

## FIG. 8A

400

118a

281

402

406

404

138

## FIG. 8B

EP 0 479 915 B1

112

DISPLAY

500

130

502

Menu F11 F12 ○ ☆ ⊷○ ●⇓ ●⇑ ◁

♪ NumLk SysReq PrtSc Break

516 518 520 524

KEYBOARD

Num ⊘

A B C D Fn ⇑

118

344 348 340 346 342

352 350

**138**

*FIG. 6A*

*FIG. 9*